# EUROPÄISCHE PATENTSCHRIFT

(11) **EP 1 237 749 B1**
(45) Veröffentlichungstag und Bekanntmachung des Hinweises auf die Patenterteilung: **16.01.2008**
(21) Anmeldenummer: 01967312.8
(22) Anmeldetag: 06.09.2001
(51) Int. Cl.: B60P 3/16

(54) **FLÜSSIGKEITSTANK**
FLUID TANK
RESERVOIR A LIQUIDES

(30) Priorität: 06.10.2000 DE 10049927
(43) Veröffentlichungstag der Anmeldung: 11.09.2002
(73) Patentinhaber: PUTZMEISTER Aktiengesellschaft, 72631 Aichtal (DE)
(72) Erfinder: SCHNEIDER, Dieter, 70794 Filderstadt (DE); THIELE, Guido, 14772 Brandenburg (DE)
(74) Vertreter: Wolf, Eckhard
(86) Internationale Anmeldenummer: PCT/EP2001/010241
(87) Internationale Veröffentlichungsnummer: WO 2002/028682

(56) Entgegenhaltungen:
- EP-A- 0 323 131
- EP-A- 0 528 151
- DE-A- 4 414 567
- DE-A- 19 547 177
- DE-U- 29 709 165
- US-A- 5 392 804

## Beschreibung

Die Erfindung betrifft einen Flüssigkeitstank mit einer durch einen Tankboden und eine im Abstand oberhalb des Tankbodens angeordnete Zwischenebene begrenzten Basispartie und mit einer oberhalb der Zwischenebene angeordneten, mit der Grundpartie kommunizierenden Dompartie.

In fahrbaren Betonpumpen wird üblicherweise ein Wassertank mitgeführt. Das Wasser wird u.a. zur Reinigung der Betonleitung oder des Materialaufgabebehälters benötigt. Hierzu sind relativ große Tanks erforderlich. Die Tanks, die einen Inhalt von 500 I und mehr aufweisen, werden an freien Stellen am Fahrgestell der Betonpumpe befestigt. Bei bekannten Betonpumpen wird der Wassertank in der Nähe des Materialaufgabebehälters und der Dickstoffpumpe am Fahrgestell angeordnet. In diesem Bereich wie auch in anderen Bereichen des Fahrgestells stehen oft Bauteile der Pumpe und des Verteilermasts einer Montage des Wassertanks im Wege. Um dennoch Flüssigkeitstanks mit ausreichendem Volumen unterbringen zu können, wird die Tankform an die vorhandenen baulichen Strukturen angepaßt. Durch zusätzliche an einer Basispartie angeordnete Dompartien kann unter Beibehaltung eines großen Tankvolumens ein freier Zwischenraum beispielsweise zur Aufnahme einer Betonleitung freigehalten werden. Bei solchen Vorkehrungen muß andererseits eine aufwendige Montage in Kauf genommen werden. So muß in dem genannten Beispielsfalle zur Auswechslung des Tanks zunächst die Betonleitung entfernt werden. Auch die Lackierung im Tankbereich ist mit Schwierigkeiten verbunden. Obwohl der Tank meist mitlackiert wird, bilden sich tote Zonen, die nachlackiert werden müssen.

Aus der EP-A-528152 ist bekannt ein Flüssigkeitstank mit einer durch einen Tankboden begrenzten Basispartie und mit einer mit der Basispartie kommunizierenden Dompartie wobei die Basispartie und die Dompartie als voneinander getrennte Hohlteile ausgebildet sind, wobei die Dompartie an ihrer Unterseite eine Bodenwand aufweist, wobei die Dompartie mit ihrer Bodenwand auf die Deckwand der Basispartie aufsetzbar ist und wobei die Deckwand der Basispartie und die Bodenwand der Dompartie jeweils einen Durchbruch aufweisen, die unter Bildung einer Durchgangsöffnung paarweise miteinander fluchten und durch Kupplungsränder begrenzt sind.

Ausgehend hiervon liegt der Erfindung die Aufgabe zugrunde, einen Flüssigkeitstank zu entwickeln, der auch in kompliziert strukturierten Umgebungen einfach ein- und ausgebaut werden kann.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung wird vor allem darin gesehen, daß die Basispartie und die Dompartie als voneinander getrennte Hohlteile ausgebildet sind, die erst im Zuge des Einbaus an Ort und Stelle miteinander verbunden werden. Zu diesem Zweck ist die Basispartie oberhalb der Zwischenebene zumindest teilweise von einer Deckwand überspannt, während die Dompartie an ihrer Unterseite eine Bodenwand aufweist. Die Dompartie ist mit ihrer Bodenwand auf die Deckwand der Basispartie aufsetzbar, wobei die Deckwand der Basispartie und die Bodenwand der Dompartie jeweils mindestens einen Durchbruch aufweisen, die unter Bildung einer Durchgangsöffnung paarweise miteinander fluchten und durch formschlüssig ineinander greifende Kupplungsränder begrenzt sind. Die zueinander komplementären, vorzugsweise rinnenartigen Kupplungsränder sind zweckmäßig in die Deckwand der Basispartie und in die Bodenwand der Dompartie eingeformt. Vorteilhafterweise sind die Kupplungsränder zum Durchbruch hin durch konisch ineinandergreifende Steckstutzen begrenzt, während zwischen den beiden Kupplungsrändern ein Dichtring aus elastomerem Material angeordnet ist.

Eine bevorzugte Ausgestaltung der Erfindung sieht vor, daß die Dompartie und die Basispartie im Bereich der Kupplungsränder miteinander verschraubt sind. Zu diesem Zweck sind im Bereich der Kupplungsränder im Abstand voneinander angeordnete, paarweise miteinander fluchtende Bohrungen für den Durchtritt von Verbindungsschrauben angeordnet, wobei die Bohrungen der Basispartie zusätzlich mit einem Innengewinde für den Eingriff der Verbindungsschrauben ausgestattet werden können. Zusätzlich können auch die Dichtringe mit in Umfangsrichtung einen Abstand voneinander aufweisenden Bohrungen für den Durchtritt der Verbindungsschrauben versehen werden.

Da die Dompartie und die Basispartie im inneren des Flüssigkeitsbehälters miteinander verschraubt werden, ist es zur Erleichterung der Montage von Vorteil, wenn die Dompartie an ihrer der Bodenwand gegenüberliegenden Deckelfläche eine mit dem bodenseitigen Durchbruch fluchtende verschließbare Montageöffnung aufweist. Die Montageöffnung eignet sich zusätzlich für den Einsatz einer Wasserpumpe, die entweder in der Montageöffnung oder im Bereich des Durchbruchs am Flüssigkeitsbehälter fixiert werden kann.

Zur Vergrößerung des Tankvolumens wird gemäß einer bevorzugten Ausgestaltung der Erfindung vorgeschlagen, daß zusätzlich mindestens eine über die Basispartie überstehende mit der Dompartie über den Innenraum der Basispartie kommunizierende Turmpartie vorgesehen ist, wobei die Dompartie und die Turmpartie unter Freilassung eines vorzugsweise nach oben offenen Zwischenraums in seitlichem Abstand voneinander angeordnet sein können. Ohne Einschränkung der mit der Erfindung erzielten Montageerleichterung kann hierbei die Turmpartie mit der Basispartie einstückig verbunden sein.

Gemäß einer bevorzugten Ausgestaltung der Erfindung ist die Basispartie und/oder die Dompartie als Formteil, vorzugsweise als Rotationsformteil aus Kunststoff ausgebildet. Das die Basispartie bildende Rotationsformteil besteht zweckmäßig aus zwei im Bereich der als Formtrennebene ausgebildeten Zwischenebene einstückig miteinander verbundenen Formteilhälften. Mit dieser Maßnahme ist es möglich, die untere Formteilhälfte der Basispartie auch mit einer anderen oberen Formteilhälfte zu kombinieren. Dies ist vor allem dann von Interesse, wenn für verschiedene Anwendungen die oberen Formteilhälften bei gleicher unterer Formteilhälfte verschieden ausgebildet sind. Diese Maßnahme führt zu einer erheblichen Reduzierung der Werkzeugkosten und Rüstzeiten.

Eine weitere Montageerleichterung wird dadurch erzielt, daß in die Seitenwände der Basispartie, vorzugsweise in deren Eckbereichen von außen her eingeformte Nischen vorgesehen sind, die bodenseitig durch angeformte Montagelaschen oder -platten begrenzt sind. Die Montagelaschen dienen dabei zweckmäßig als Befestigungslaschen, mit denen der Flüssigkeitstank gegebenenfalls unter Zwischenlage einer Metallverstärkung am Fahrgestell befestigt werden kann. Eine zusätzlich vorgesehene Montageplatte kann - gegebenenfalls unter Verwendung einer metallischen Adapterplatte - zur Aufnahme einer Hochdruckpumpe oder einer Ablagewanne benutzt werden.

Weiter können in den Boden und/oder die Seitenwände der Basispartie oder der Dompartie Versteifungssicken eingeformt werden, mit denen auch bei dünnwandiger Ausbildung eine Verformung oder Ausbeulung des Flüssigkeitstanks vermieden werden kann.

Weiter kann in die Basispartie eine als Ablaufsumpf ausgebildete, mit einem Ablaufstutzen versehene, nach unten weisende Bodenauswölbung eingeformt werden.

Der erfindungsgemäße Flüssigkeitstank wird bevorzugt als Wassertank für fahrbare Arbeitsmaschinen, insbesondere für fahrbare Betonpumpen verwendet, wobei im letzteren Falle ein Betonförderrohr durch den freien Zwischenraum zwischen Dompartie und Turmpartie hindurchgreifen kann. Bei dieser Art Verwendungen wird im Zuge der Montage zunächst die Basispartie mit ihrem die Deckwand tragenden Teil unter dem auf dem Fahrgestell der Betonpumpe montierten Betonförderrohr hindurchgeschoben und am Fahrgestell befestigt. Die Dompartie wird anschließend mit ihrer Bodenwand auf die Deckwand der Basispartie aufgesetzt und im Bereich der Kupplungsränder im Inneren des Flüssigkeitsbehälters mit dieser verschraubt.

Im folgenden wird die Erfindung anhand der Zeichnung näher erläutert. Es zeigen
- Fig. 1: eine Seitenansicht einer fahrbaren Betonpumpe mit Wassertank;
- Fig. 2: den Wassertank nach Fig. 1 in vergrößerter schaubildlicher Darstellung;
- Fig. 3 a und b: die Basispartie und die Dompartie des Wassertanks nach Fig. 2 in schaubildlichen Darstellungen;
- Fig. 4 a: eine Seitenansicht des Wassertanks nach Fig. 2;

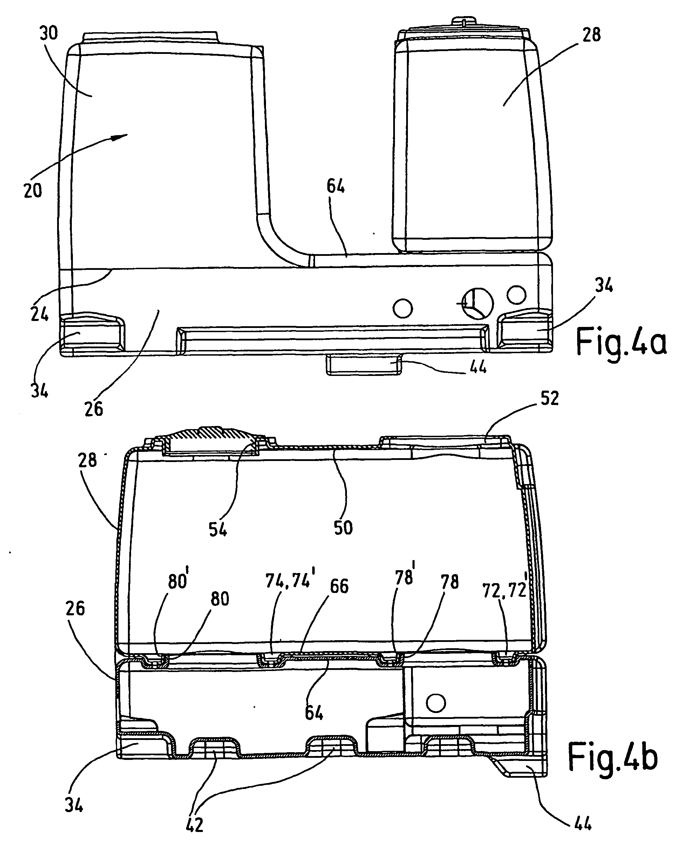

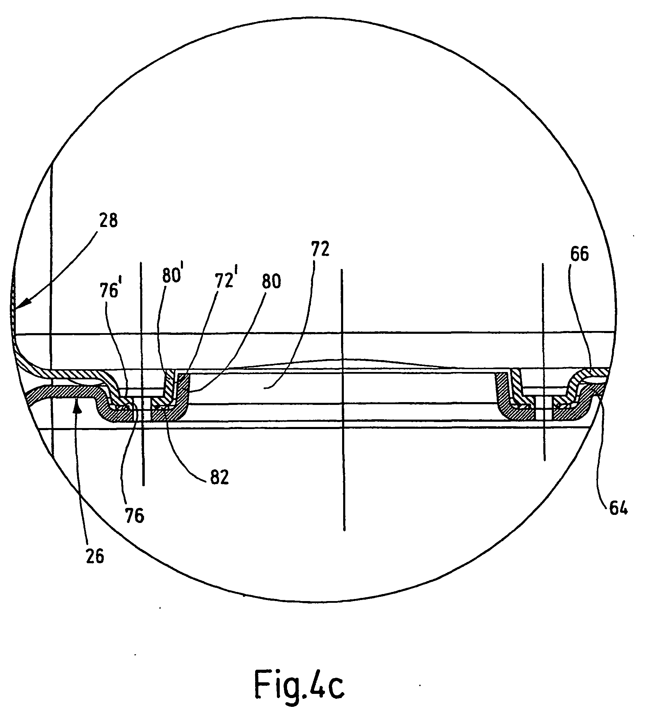

- Fig. 4 b: einen Schnitt entlang der Schnittlinie B - B der Fig. 4 a;
- Fig 4 c: einen vergrößerten Ausschnitt aus Fig. 4 b;

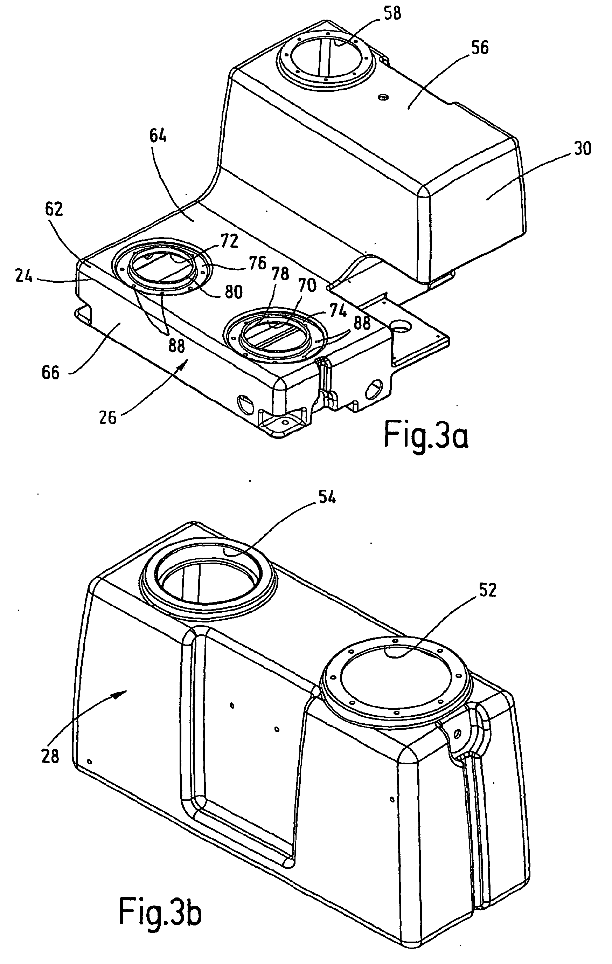

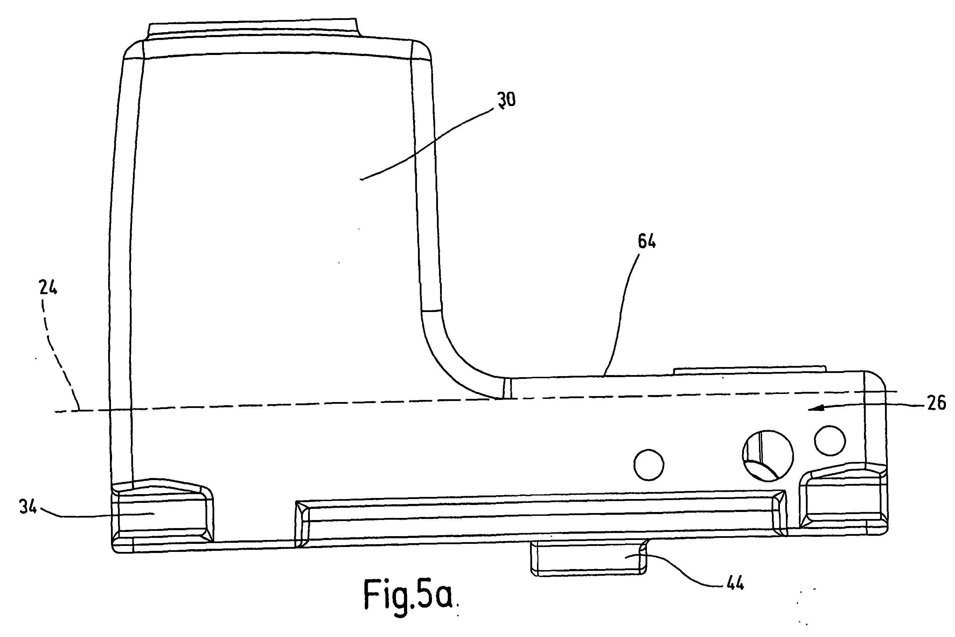

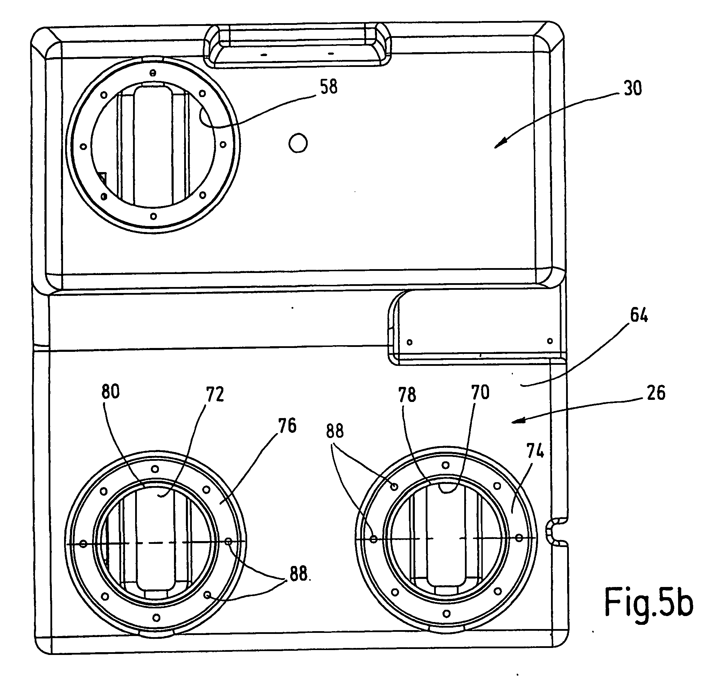

- Fig. 5 a und b: eine Seitenansicht und eine Draufsicht der Basispartie nach Fig. 3 a;

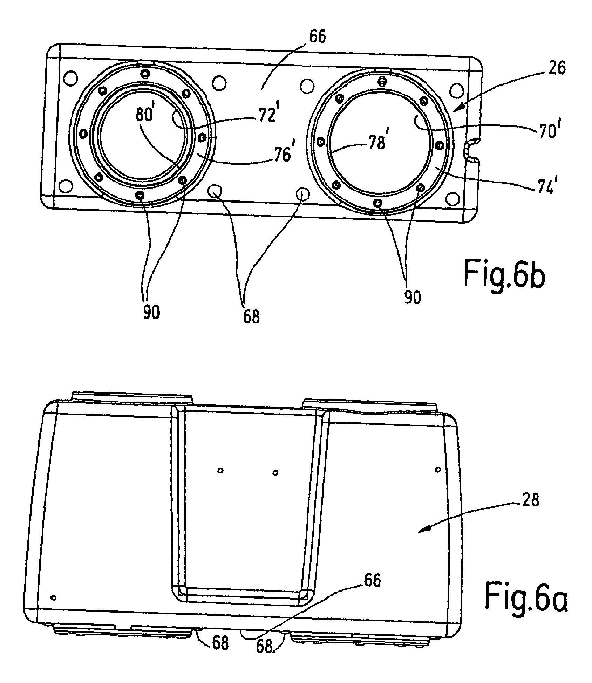

- Fig. 6 a und b: eine Seitenansicht und eine Untenansicht der Dompartie nach Fig. 3 b;

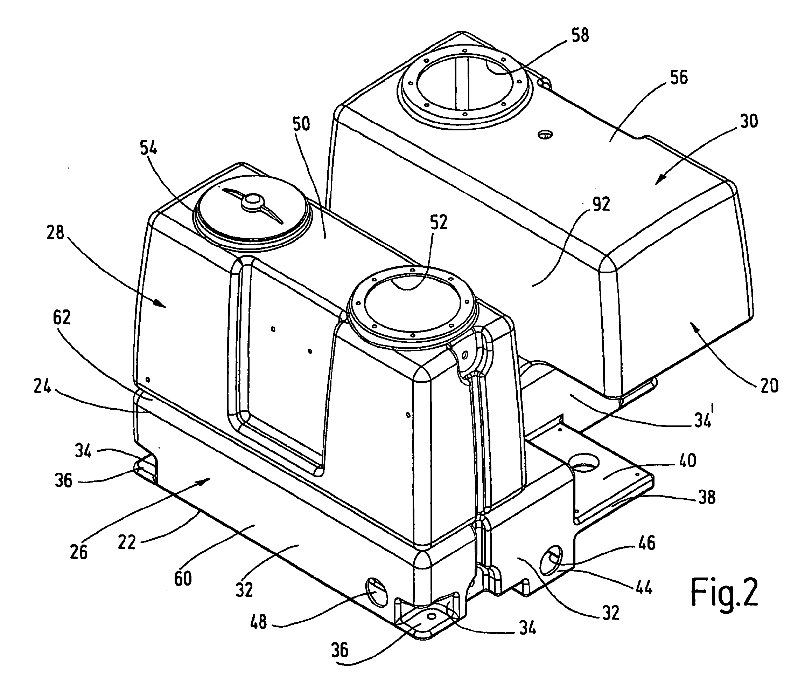

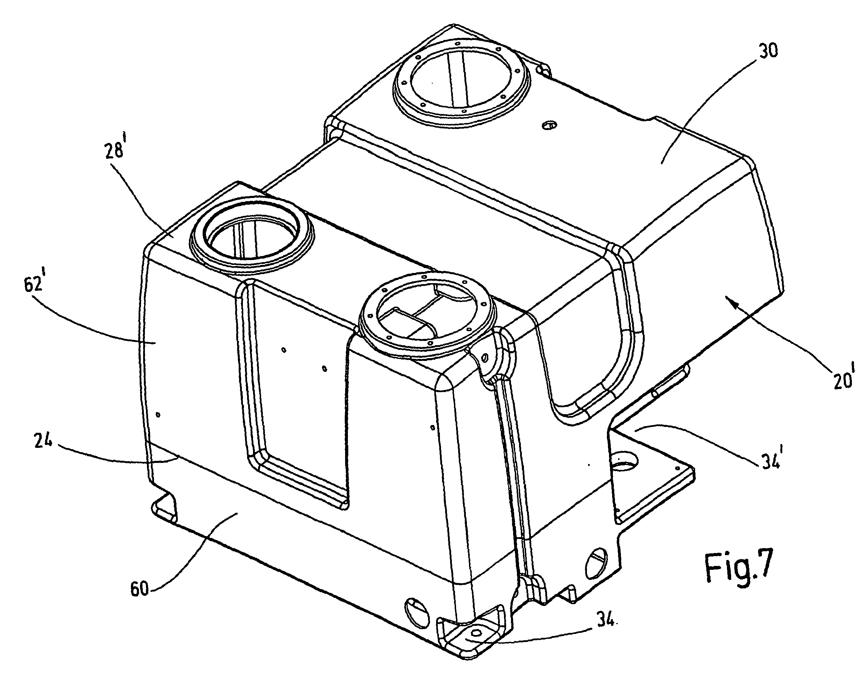

- Fig. 7: einen gegenüber Fig. 2 abgewandelten Flüssigkeitstank in schaubildlicher Darstellung.

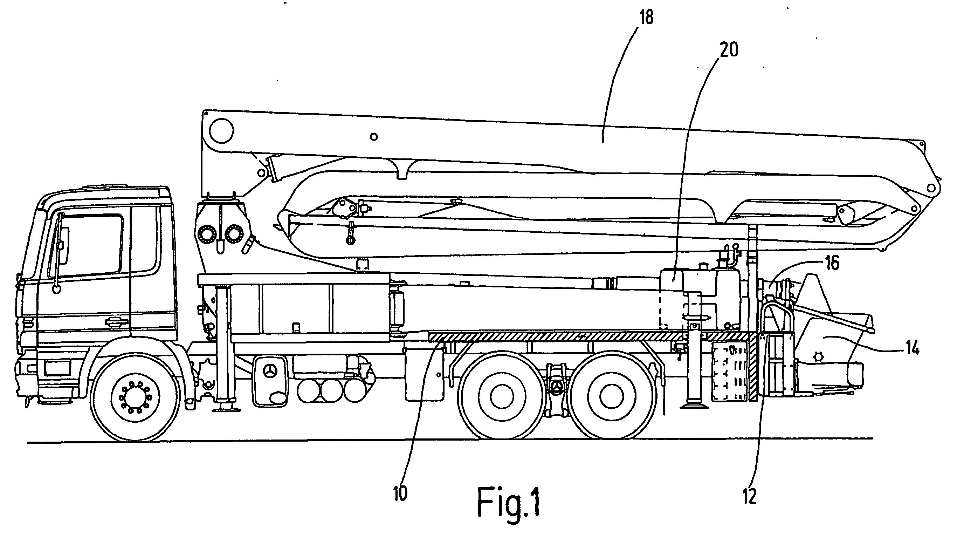

Die in Fig. 1 dargestellte fahrbare Betonpumpe besteht im wesentlichen aus einem Fahrgestell 10, einer auf dem Fahrgestell angeordneten Dickstoffpumpe 12, die saugseitig mit einem Materialaufgabebehälter 14 und druckseitig mit einem Betonförderrohr 16 kommuniziert, und einem auf dem Fahrgestell 10 angeordneten, einen beweglichen Teil des Betonförderrohrs 16 tragenden, als Knickmast ausgebildeten Verteilermast 18. Nach jedem Pumpvorgang muß der Materialaufgabebehälter 14 und das Betonförderrohr 16 einer Reinigung unterzogen werden. Dazu ist u.a. Wasser erforderlich. Das Reinigungswasser wird in einem Flüssigkeitstank 20, 20' mitgeführt, der in der Nähe der Dickstoffpumpe 12 und des Materialaufgabebehälters 14 auf dem Fahrgestell 10 angeordnet ist und ein Fassungsvermögen von etwa 500 I aufweist.

Die in der Zeichnung dargestellten Flüssigkeitstanks 20, 20' weisen eine durch einen Tankboden 22 und durch eine im Abstand oberhalb des Tankbodens befindliche, als Formtrennebene ausgebildete Zwischenebene 24 (Fig. 5 a) begrenzte Basispartie 26 und je eine oberhalb der Zwischenebene angeordnete, mit der Basispartie 26 kommunizierende Dompartie 28 und Turmpartie 30 auf.

In den Seitenwänden 32 der Basispartie sind in deren bodennahen Eckbereichen von außen her eingeformte Nischen 34 angeordnet, die bodenseitig durch eine angeformte Montagelasche 36 begrenzt sind. Die Montagelaschen 36 dienen zur Befestigung des Flüssigkeitstanks 20, 20' am Fahrgestell. Weiter befindet sich zwischen Basispartie 26 und Turmpartie 30 eine weitere Nische 34' mit einer eingeformten Montageplatte 38, die mit einer metallischen Adapterplatte 40 zur Befestigung einer nicht dargestellten Hochdruckpumpe oder eines Ablagebehälters bestimmt ist. Im Bereich des Tankbodens 22 sind in die Basispartie 26 Versteifungssicken 42 eingeformt, die bei gefülltem Tank ein unerwünschtes Durchbiegen des Tankbodens 22 verhindern sollen. Weiter ist der Tankboden 22 mit einer als Ablaufsumpf mittig ausgebildeten, nach unten weisenden Ausbuchtung 44 versehen, die eine mit einem Stutzen bestückbare Auslaßöffnung 46 aufweist. Im unteren Bereich der Basispartie 26 ist in einer Seitenwand 32 eine Einlaßöffnung 48 vorgesehen, die mit einem Einlaßstutzen bestückbar ist, über den der Flüssigkeitsbehälter 20, 20' mit Leitungswasser auffüllbar ist.

An der Deckelfläche 50 der Dompartie 28 befinden sich zwei verschließbare Öffnungen 52, 54, während in der Deckelfläche 56 der Turmpartie 30 eine Öffnung 58 angeordnet ist. Die Turmpartie 30 ist sowohl bei dem in Fig. 2 bis 6 gezeigten Ausgangsbeispiel als auch bei dem Ausführungsbeispiel nach Fig. 7 einstückig mit der Basispartie 26 verbunden. Ein wesentlicher Unterschied zwischen den beiden Ausführungsformen besteht darin, daß bei dem Flüssigkeitstank nach Fig. 2 bis 6 die Basispartie 26 mit der Turmpartie 30 einerseits und die Dompartie 28 andererseits als voneinander getrennte Hohlteile ausgebildet sind, während im Fall der Fig. 7 die Dompartie 28 einstückig mit der Basispartie 26 verbunden ist. Im ersteren Falle sind die Dompartie 28 und die Turmpartie 30 unter Bildung eines nach oben offenen Zwischenraums 92 in seitlichem Abstand voneinander angeordnet. Die Hohlteile sind als Rotationsformteile aus Kunststoff ausgebildet. Das die Basispartie bildende Rotationsformteil besteht dabei aus zwei im Bereich der als Formtrennebene ausgebildeten Zwischenebene 24 einstückig miteinander verbundenen Formteilhälften 60 einerseits und 62 bzw. 62' andererseits. Die bodenseitige Formteilhälfte 60 ist bei den beiden Ausführungsbeispielen nach Fig. 2 bis 6 und Fig. 7 gleich ausgebildet, während die oberen Formteilhälften 62 bzw. 62' der beiden Ausführungsbeispiele verschieden ausgebildet sind. Für beide Ausführungsformen ist also nur ein einziges Formwerkzeug für die untere Formteilhälfte 60 erforderlich, was zu einer erheblichen Einsparung bei den Werkzeug- und Rüstkosten führt.

Der Flüssigkeitstank 20 nach den Fig. 2 bis 6, der eine von der Basispartie 26 abnehmbare Dompartie 28 aufweist, ist auch in kompliziert strukturierten Umgebungen einfach und ohne Rücksicht auf die Einbau-Reihenfolge am Fahrgestell montierbar. Die Basispartie 26 ist zu diesem Zweck oberhalb der Zwischenebene 24 teilweise von einer Deckwand 64 überspannt, während die Dompartie 28 an ihrer Unterseite eine Bodenwand 66 aufweist. Die Dompartie 28 ist an ihrer Bodenwand 66 mit einer Mehrzahl von im Abstand voneinander angeordneten, nach unten überstehenden konkaven Auswölbungen 68 versehen, mit denen sie beim Aufsetzen auf die Basispartie 26 auf der Oberfläche der Deckwand 64 abstützbar ist. Weiter weisen die Deckwand 64 der Basispartie 26 und die Bodenwand 66 der Dompartie 28 jeweils zwei Durchbrüche 70, 70' bzw. 72, 72' auf, die unter Bildung jeweils einer gemeinsamen Durchgangsöffnung paarweise miteinander fluchten und durch formschlüssig ineinander greifende Kupplungsränder 74, 74' bzw. 76, 76' begrenzt sind. Die zueinander komplementären rinnenartigen Kupplungsränder 74, 76 bzw. 74', 76' sind in die Deckwand 64 und in die Bodenwand 66 eingeformt (Fig. 4 c). Sie sind zum Durchbruch hin durch konisch ineinander greifende Steckstutzen 78, 80 bzw. 78', 80' begrenzt. Zwischen den zugehörigen Kupplungsrändern ist jeweils ein Dichtring 82, 84 aus elastomerem Material angeordnet. Weiter sind die Dompartie 28 und die Basispartie 26 mittels Schrauben 86, die durch Bohrungen 88, 90 im Bereich der Deckwand 64 und der Bodenwand 66 innerhalb der Kupplungsränder hindurchgreifen, miteinander verschraubt. Die Bohrungen 88 in der Deckwand 64 der Basispartie 26 sind dabei mit einem Innengewinde für die Schrauben 86 ausgestattet. Wie aus Fig. 4 c zu ersehen ist, greifen die Schrauben 86 auch durch entsprechende Durchbrüche in den Dichtringen 82, 84 hindurch. Die Montagearbeit bei der Verschraubung kann durch die Öffnungen 52, 54 in der Deckelfläche 50 der Dompartie 28 hindurch erfolgen.

Zusammenfassend ist folgendes festzuhalten: Die Erfindung bezieht sich auf einen Flüssigkeitstank 20 mit einer durch einen Tankboden 22 und eine im Abstand oberhalb des Tankbodens 22 angeordnete Zwischenebene 24 begrenzten Basispartie 26 und mit einer oberhalb der Zwischenebene 24 angeordneten, mit der Basispartie 26 kommunizierenden Dompartie 28. Um den Flüssigkeitstank auch in einer kompliziert strukturierten Umgebung, beispielsweise auf dem Fahrgestell einer fahrbaren Betonpumpe montieren zu können, wird gemäß der Erfindung vorgeschlagen, daß die Basispartie 26 und die Dompartie 28 als voneinander getrennte Hohlteile ausgebildet sind.

## Patentansprüche

1. Flüssigkeitstank mit einer durch einen Tankboden (22) und eine im Abstand oberhalb des Tankbodens angeordnete Zwischenebene (24) begrenzten Basispartie (26) und mit einer oberhalb der Zwischenebene (24) angeordneten mit der Basispartie (26) kommunizierenden Dompartie (28), wobei die Basispartie (26) und die Dompartie (28) als voneinander getrennte Hohlteile ausgebildet sind, wobei die Basispartie oberhalb der Zwischenebene (24) zumindest teilweise von einer Deckwand (64) überspannt ist, wobei die Dompartie (28) an ihrer Unterseite eine Bodenwand (66) aufweist, wobei die Dompartie (28) mit ihrer Bodenwand (66) auf die Deckwand (64) der Basispartie (26) aufsetzbar ist und wobei die Deckwand (64) der Basispartie (26) und die Bodenwand (66) der Dompartie (28) jeweils mindestens einen Durchbruch (70, 70'; 72, 72') aufweisen, die unter Bildung einer Durchgangsöffnung paarweise miteinander fluchten und durch formschlüssig ineinander greifende Kupplungsränder (74, 74'; 76, 76') begrenzt sind.

2. Flüssigkeitstank nach Anspruch 1, **dadurch gekennzeichnet, daß** die zueinander komplementären, vorzugsweise rinnenartigen Kupplungsränder (74, 76; 74', 76') in die Deckwand (64) der Basispartie (26) und in die Bodenwand (66) der Dompartie (28) eingeformt sind.

3. Flüssigkeitstank nach Anspruch 1 oder 2, **dadurch gekennzeichnet, daß** die Kupplungsränder zum Durchbruch (70, 70'; 72, 72') hin durch konisch ineinander greifende Steckstutzen (78, 78'; 80, 80') begrenzt sind.

4. Flüssigkeitstank nach einem der Ansprüche 1 bis 3, **dadurch gekennzeichnet, daß** die Durchbrüche (70, 70'; 72, 72') und die Kupplungsränder (74, 74'; 76, 76') einen kreisförmigen Umriß aufweisen.

5. Flüssigkeitstank nach einem der Ansprüche 1 bis 4, **dadurch gekennzeichnet, daß** zwischen den beiden Kupplungsrändern (74, 74'; 76, 76') ein Dichtring (82; 84) aus elastomerem Material angeordnet ist.

6. Flüssigkeitstank nach einem der Ansprüche 1 bis 5, **dadurch gekennzeichnet, daß** die Dompartie (28) und die Basispartie (26) im Bereich der Kupplungsränder miteinander verschraubt sind.

7. Flüssigkeitstank nach einem der Ansprüche 1 bis 6, **dadurch gekennzeichnet, daß** im Bereich der Kupplungsränder im Abstand voneinander angeordnete, paarweise miteinander fluchtende Bohrungen (88, 90) für den Durchtritt von Verbindungsschrauben (86) angeordnet sind.

8. Flüssigkeitstank nach Anspruch 7, **dadurch gekennzeichnet, daß** die Bohrungen (88) der Basispartie (26) mit einem Innengewinde für den Eingriff der Verbindungsschrauben (86) ausgestattet sind.

9. Flüssigkeitstank nach einem der Ansprüche 5 bis 8, **dadurch gekennzeichnet, daß** der Dichtring (82, 84) mit in Umfangsrichtung einen Abstand voneinander aufweisenden Bohrungen für den Durchtritt von Verbindungsschrauben (86) versehen ist.

10. Flüssigkeitstank nach einem der Ansprüche 1 bis 9, **dadurch gekennzeichnet, daß** die Dompartie (28) an ihrer der Bodenwand (66) gegenüberliegenden Deckelfläche (50) eine mit dem bodenwandseitigen Durchbruch (70', 72') fluchtende, verschließbare Montageöffnung (52, 54) aufweist.

11. Flüssigkeitstank nach einem der Ansprüche 1 bis 10, **gekennzeichnet durch** mindestens eine über die Basispartie (26) überstehende, mit der Dompartie (28) über den Innenraum der Basispartie (26) kommunizierende Turmpartie (30).

12. Flüssigkeitstank nach Anspruch 11, **dadurch gekennzeichnet, daß** die Dompartie (28) und die Turmpartie (30) unter Freilassung eines vorzugsweise nach oben offenen Zwischenraums (92) in seitlichem Abstand voneinander angeordnet sind.

13. Flüssigkeitstank nach Anspruch 11 oder 12, **dadurch gekennzeichnet, daß** die Turmpartie (30) einstückig mit der Basispartie (26) verbunden ist.

14. Flüssigkeitstank nach einem der Ansprüche 1 bis 13, **dadurch gekennzeichnet, daß** die Basispartie (26) und/oder die Dompartie (28) als Formteil, vorzugsweise als Rotationsformteil aus Kunststoff ausgebildet ist.

15. Flüssigkeitstank nach Anspruch 14, **dadurch gekennzeichnet, daß** das die Basispartie (26) bildende Rotationsformteil aus zwei im Bereich der als Formtrennebene ausgebildeten Zwischenebene (24) einstückig miteinander verbundenen Formteilhälften (60; 62, 62') besteht.

16. Flüssigkeitstank nach einem der Ansprüche 1 bis 15, **gekennzeichnet durch** in den Seitenwänden (32) der Basispartie (26), vorzugsweise in deren Eckbereichen von außen her eingeformte Nischen (34, 34') die bodenseitig **durch** eine angeformte Montagelasche (36) oder -platte (38) begrenzt sind.

17. Flüssigkeitstank nach einem der Ansprüche 1 bis 16, **dadurch gekennzeichnet, daß** in den Tankboden (22) und/oder die Seitenwände (32) der Basispartie (26) und/oder der Dompartie (28) Versteifungssikken (42) eingeformt sind.

18. Flüssigkeitstank nach einem der Ansprüche 1 bis 17, **dadurch gekennzeichnet, daß** in die Basispartie (26) eine als Ablaufsumpf ausgebildete, mit einem Ablaufstutzen (46) versehene, nach unten weisende Bodenausbuchtung (44) eingeformt ist.

19. Verwendung des Flüssigkeitstanks nach einem der Ansprüche 1 bis 18 als Wassertank für fahrbare Arbeitsmaschinen.

20. Verwendung des Flüssigkeitstanks nach dem der Ansprüche 12 bis 18 als Wassertank für fahrbare Betonpumpen, bei denen ein Betonförderrohr (16) durch den freien Zwischenraum (92) zwischen der Dompartie (28) und der Turmpartie (30) des Wassertanks hindurchgreift.

21. Verwendung nach Anspruch 20, **dadurch gekennzeichnet, daß** zunächst die Basispartie (26) mit ihrem die Deckwand (64) tragenden Teil unter dem auf einem Fahrgestell (10) der Betonpumpe montierten Betonförderrohr (16) hindurchgeschoben und am Fahrgestell befestigt wird, und daß anschließend die Dompartie (28) mit ihrer Bodenwand (66) auf die Deckwand (64) der Basispartie (26) aufgesetzt und im Bereich der Kupplungsränder (74, 74', 76, 76') im Inneren des Flüssigkeitsbehälters mit dieser verschraubt wird.

## Claims

1. Fluid tank with
a base section (26) defined by a tank floor (22) and an intermediate plane (24), situated above the tank floor (22) and
a domed section (28), situated above the intermediate plane (24) and communicating with the base part (26),
wherein the base part (26) and the dome part (28) are in the form of separate hollow parts,
wherein the base part is at least partially covered over by a cover wall (64) above the intermediate plane (24),
wherein the dome part (28) includes on its lower side a floor wall (66),
wherein the dome part (28) is seatable with its floor wall (66) upon the cover wall (64) of the base part (26), and
wherein the cover wall (64) of the base part (26) and the floor wall (66) of the dome part (28) respectively are provided with at least one through hole (70, 70'; 72, 72') which pair-wise align with each other to form a through opening and which are bordered by coupling rims (74, 74'; 76, 76') engaging form-fitting in each other.

2. Fluid tank according to Claim 1, thereby **characterized,** that the complimentarily coupling edges (74, 76; 74', 76') adapted to mating engagement, preferably channeled grooved, are formed into the cover wall (64) of the base part (26) and the floor wall (66) of the dome part (28).

3. Fluid tank according to Claim 1 or 2, thereby **characterized**, that the coupling edges are bordered towards the through hole (70, 70'; 72, 72') by conically in each other engaging plug connectors or stand pipes (78, 78'; 80, 80').

4. Fluid tank according to one of Claims 1 through 3, thereby **characterized**, that the through holes (70, 70'; 72, 72') and the coupling edges (74, 74'; 76, 76') exhibit a circular contour.

5. Fluid tank according to one of Claims 1 through 4, thereby **characterized**, that a sealing ring (82; 84) of elastomeric material is provided between the two coupling edges (74, 74'; 76, 76').

6. Fluid tank according to one of Claims 1 through 5, thereby **characterized**, that the dome part (28) and the base part (26) are screwed together with each other in the area of the coupling edges.

7. Fluid tank according to one of Claims 1 through 6, thereby **characterized**, that boreholes (88, 90) are provided in the area of the coupling edges, spaced apart from each other, pair-wise aligned with each other, for the passage through of connecting screws (86).

8. Fluid tank according to Claim 7, thereby **characterized**, that the boreholes (88) of the base part (26) are provided with internal threadings for engagement with the connecting screws (86).

9. Fluid tank according to one of Claims 5 through 8, thereby **characterized**, that the seal ring (82, 84) is provided with boreholes spaced apart from each other circumferentially for the passage through of connecting screws (86).

10. Fluid tank according to one of Claims 1 through 9, thereby **characterized**, that the dome part (28) on the cover surface (50) lying opposite to the floor wall (66) is provided with a lockable assembly opening (52, 54) aligned with the through holes (70', 72') on the floor.

11. Fluid tank according to one of Claims 1 through 10, **characterized by** at least one tower part (30) projecting above the base part (26), communicating with the dome part (28) via the internal space of the base part (26).

12. Fluid tank according to Claim 11, thereby **characterized**, that the dome part (28) and the tower part (30) are provided spaced apart from each other maintaining free a preferably upwardly open intermediate space (92).

13. Fluid tank according to Claim 11 or 12, thereby **characterized**, that the tower part (30) is connected unitarily with the base part (26).

14. Fluid tank according to one of Claims 1 through 13, thereby **characterized**, that the base part (26) and/or the dome part (28) are constructed as mold parts, preferably as rotation or spin cast mold parts of plastic.

15. Fluid tank according to Claim 14, thereby **characterized**, that the rotation mold part forming the base part (26) is comprised of two mold part halves (60; 62, 62') connected unitarily with each other along the area of the mold separation line located at the intermediate plane (24).

16. Fluid tank according to one of Claims 1 through 15, **characterized by** niches (34, 34') formed from outside into the side walls (32) of the base part (26), preferably in the corner areas, which from the floor side are bounded by integral mounting lips (36) or plates (38).

17. Fluid tank according to one of Claims 1 through 16, thereby **characterized**, that reinforcing strips (42) are formed in the tank floor (22) and/or the side walls (32) of the base part (26) and/or the dome part (28).

18. Fluid tank according to one of Claims 1 through 17, thereby **characterized**, that that the base part (26) includes a downwardly directed drainage sump with a drainage stand pipe or connector (46).

19. Use of the fluid tank according to one of Claims 1 through 18 as water tank for a mobile work machine.

20. Use of the fluid tank according to one of Claims 12 through 18 as water tank for mobile concrete pumps, wherein a concrete delivery pipe (16) extends through the free interstitial space (92) between the dome part (28) and the tower part (30) of the water tank.

21. Use according to Claim 20, thereby **characterized**, that first the base part (26) with its cover wall (64) carrying part is pushed through below a concrete conveyance pipe (16) of the concrete pump mounted on the vehicle chassis (10) and is secured to the vehicle chassis, and that subsequently the dome part (28) is seated with its floor wall (66) upon the cover wall (64) of the base part (26) and is screwed thereto in the area of the coupling edges (74, 74', 76, 76') in the inside of the fluid container.

## Revendications

1. Réservoir à liquides comprenant une partie de base (26) délimitée par un fond (22) dudit réservoir et par un plan intermédiaire (24) situé à distance au-dessus dudit fond du réservoir, et une partie supérieure (28) située au-dessus dudit plan intermédiaire (24) et communiquant avec ladite partie de base (26), sachant que ladite partie de base (26) et ladite partie supérieure (28) sont réalisées sous la forme de pièces creuses séparées l'une de l'autre ; sachant que la partie de base est surmontée, au moins partiellement, d'une paroi de recouvrement (64) au-dessus du plan intermédiaire (24) ; sachant que la partie supérieure (28) comporte une paroi de fond (66) à sa face inférieure, ladite partie supérieure (28) pouvant être mise en place, par sa paroi de fond (66), sur la paroi de recouvrement (64) de la partie de base (26) ; et sachant que la paroi de recouvrement (64) de la partie de base (26) et la paroi de fond (66) de la partie supérieure (28) présentent, respectivement, au moins une perforation (70, 70' ; 72, 72'), lesdites perforations coïncidant mutuellement par paires, en formant un orifice de passage commun, et étant délimitées par des rebords d'accouplement (74, 74' ; 76, 76') s'interpénétrant par concordance de formes.

2. Réservoir à liquides, selon la revendication 1, **caractérisé par le fait que** les rebords d'accouplement (74, 76 ; 74', 76'), de préférence du type rigoles mutuellement complémentaires, sont moulés dans la paroi de recouvrement (64) de la partie de base (26) et dans la paroi de fond (66) de la partie supérieure (28).

3. Réservoir à liquides, selon la revendication 1 ou 2, **caractérisé par le fait que** les rebords d'accouplement sont délimités, en direction de la perforation (70, 70' ; 72, 72'), par des manchons emboîtables (78, 78' ; 80, 80') à interpénétration tronconique.

4. Réservoir à liquides, selon l'une des revendications 1 à 3, **caractérisé par le fait que** les perforations (70, 70' ; 72, 72') et les rebords d'accouplement (74, 74' ; 76, 76') offrent une configuration circulaire.

5. Réservoir à liquides, selon l'une des revendications 1 à 4, **caractérisé par le fait qu'**une bague d'étanchement (82 ; 84) en un matériau élastomère est interposée entre les deux rebords d'accouplement (74, 74' ; 76, 76').

6. Réservoir à liquides, selon l'une des revendications 1 à 5, **caractérisé par le fait que** la partie supérieure (28) et la partie de base (26) sont solidarisées par vissage dans la région des rebords d'accouplement.

7. Réservoir à liquides, selon l'une des revendications 1 à 6, **caractérisé par le fait que** des perçages (88, 90) coïncidant par paires et mutuellement distants sont pratiqués, dans la région des rebords d'accouplement, pour permettre le passage de vis de solidarisation (86).

8. Réservoir à liquides, selon la revendication 7, **caractérisé par le fait que** les perçages (88) de la partie de base (26) sont munis d'un filetage intérieur destiné à la venue en prise des vis de solidarisation (86).

9. Réservoir à liquides, selon l'une des revendications 5 à 8, **caractérisé par le fait que** la bague d'étanchement (82, 84) est dotée de perçages mutuellement distants dans le sens périphérique, pour permettre le passage de vis de solidarisation (86).

10. Réservoir à liquides, selon l'une des revendications 1 à 9, **caractérisé par le fait que** la partie supérieure (28) comporte, sur la surface (50) qui la coiffe et est tournée à l'opposé de la paroi de fond (66), un orifice de montage (52, 54) pouvant être obturé et coïncidant avec la perforation (70', 72') située du côté de ladite paroi de fond.

11. Réservoir à liquides, selon l'une des revendications 1 à 10, **caractérisé par** au moins une tourelle (30) dépassant au-dessus de la partie de base (26) et communiquant avec la partie supérieure (28) par l'intermédiaire de l'espace interne de ladite partie de base (26).

12. Réservoir à liquides, selon la revendication 11, **caractérisé par le fait que** la partie supérieure (28) et la tourelle (30) se trouvent latéralement à distance l'une de l'autre, en réservant un espace intercalaire (92) préférentiellement ouvert vers le haut.

13. Réservoir à liquides, selon la revendication 11 ou 12, **caractérisé par le fait que** la tourelle (30) est reliée d'un seul tenant à la partie de base (26).

14. Réservoir à liquides, selon l'une des revendications 1 à 13, **caractérisé par le fait que** la partie de base (26) et/ou la partie supérieure (28) est (sont) réalisée(s) en tant que pièce moulée, de préférence en tant que pièce rotomoulée en matière plastique.

15. Réservoir à liquides, selon la revendication 14, **caractérisé par le fait que** la pièce rotomoulée, matérialisant la partie de base (26), est composée de deux moitiés (60 ; 62, 62') reliées l'une à l'autre, d'un seul tenant, dans la région du plan intermédiaire (24) conçu comme un plan séparatif de moulage.

16. Réservoir à liquides, selon l'une des revendications 1 à 15, **caractérisé par** des niches (34, 34') qui sont empreintes depuis l'extérieur dans les parois latérales (32) de la partie de base (26), de préférence dans les zones d'angle de cette dernière, et sont délimitées, côté fond, par une patte de montage (36) ou une platine de montage (38) venue de moulage solidaire.

17. Réservoir à liquides, selon l'une des revendications 1 à 16, **caractérisé par le fait que** des moulures de rigidification (42) sont intégrées par moulage dans le fond (22) du réservoir et/ou dans les parois latérales (32) de la partie de base (26) et/ou de la partie supérieure (28).

18. Réservoir à liquides, selon l'une des revendications 1 à 17, **caractérisé par le fait qu'**une zone inférieure protubérante (44) orientée vers le bas, réalisée sous la forme d'une bonde d'évacuation et pourvue d'un embout de sortie (46), est façonnée dans la partie de base (26).

19. Utilisation du réservoir à liquides, selon l'une des revendications 1 à 18, en tant que réservoir d'eau pour machines mobiles d'intervention.

20. Utilisation du réservoir à liquides, selon l'une des revendications 12 à 18, en tant que réservoir d'eau pour pompes à béton mobiles dans lesquelles une tubulure (16) de refoulement de béton parcourt, d'un trait, l'espace intercalaire libre (92) situé entre la partie supérieure (28) et la tourelle (30) dudit réservoir d'eau.

21. Utilisation selon la revendication 20, **caractérisée par le fait qu'**au moins la partie de base (26) est engagée, par sa partie portant la paroi de recouvrement (64), au-dessous de la tubulure (16) de refoulement de béton montée sur un châssis de roulement (10) de la pompe à béton, puis est fixée audit châssis de roulement ; et **par le fait que** la partie supérieure (28) est mise en place dans l'enchaînement, par sa paroi de fond (66), sur la paroi de recouvrement (64) de la partie de base (26) avec laquelle elle est solidarisée par vissage, dans la région des rebords d'accouplement (74, 74' ; 76, 76'), dans l'espace intérieur du réservoir à liquides.
